# EUROPÄISCHE PATENTSCHRIFT

(11) **EP 1 053 162 B1**
(45) Veröffentlichungstag und Bekanntmachung des Hinweises auf die Patenterteilung: **16.01.2002**
(21) Anmeldenummer: 99906214.4
(22) Anmeldetag: 01.02.1999
(51) Int. Cl.: B62D 1/06, H05B 3/34

(54) **HEIZELEMENT FÜR EIN BEGREIFBARES TEIL EINES KRAFTFAHRZEUGES, INSBESONDERE FÜR DAS LENKRAD**
HEATING ELEMENT FOR A PART OF AN AUTOMOBILE WHICH IS HELD, ESPECIALLY THE STEERING WHEEL
ELEMENT CHAUFFANT POUR UNE PIECE SAISISSABLE D'UN VEHICULE AUTOMOBILE, EN PARTICULIER POUR LE VOLANT

(30) Priorität: 04.02.1998 DE 29802578 U
(43) Veröffentlichungstag der Anmeldung: 22.11.2000
(73) Patentinhaber: Takata-Petri AG, 63743 Aschaffenburg (DE)
(72) Erfinder: BONN, Helmut, D-63808 Haibach (DE); GERMUTH-LÖFFLER, Michael, D-63741 Aschaffenburg (DE)
(74) Vertreter: Baumgärtel, Gunnar, Dr.
(86) Internationale Anmeldenummer: EP9900641
(87) Internationale Veröffentlichungsnummer: WO9939964

(56) Entgegenhaltungen:
- EP-A- 0 437 641
- EP-A- 0 463 516
- DE-A- 2 951 871
- DE-A- 3 139 410
- DE-A- 3 837 743
- DE-U- 29 802 578

## Beschreibung

Die Erfindung betrifft ein Heizelement für ein begreifbares Teil eines Kraftfahrzeuges, insbesondere für das Lenkrad, nach dem Oberbegriff des Anspruchs 1.

Aus der DE 29 51 871 A1 ist eine Lenkradhülle bekannt, an deren Innenfläche eine Gewebeeinlage befestigt ist, in die Widerstandsdrähte eingebettet sind. Die Gewebeeinlage ist mit einer Abdeckung versehen, so daß die Widerstandsdrähte nicht direkt auf dem Lenkradkranz aufliegen.

Diese Lenkradhülle mit beheizter Gewebeeinlage weist den Nachteil auf, daß Gewebe nur wenig dehnbar ist, so daß sich die Hülle dem dreidimensionalen Lenkradkranz nur unvollständig anpassen kann. Falten lassen sich deshalb kaum vermeiden.

Aus der EP-A-0437641 ist ein Heizelement für ein Lenkrad bekannt, wobei das Heizelement aus einem Kettengewirke besteht. Ein solches Heizelement ist aber teuer in der Herstellung und außerdem ist es nicht möglich, die Heizleistung und Heizleistungsverteilung dem jeweiligen Bedarf anzupassen.

Aus der EP-A-0463516 ist ein elektrisches Flächenheizelement bekannt, bei dem in einer textilen Kettenwirkware in vorbestimmten Abständen durch versetzten oder geraden Schußeintrag Heizleiter eingebracht sind. Dieses Heizelement ist insbesondere für die Beheizung zumindest nahezu ebener Flächen, wie z.B. Autositze, geeignet.

Der Erfindung liegt die Aufgabe zugrunde, das Heizelement so auszubilden, daß es sich faltenlos dreidimensionalen, zu beheizenden Teilen im Kraftfahrzeug anpassen kann.

Erfindungsgemäß wird das gemäß den Merkmalen des Anspruchs 1 erreicht.

Bei einem Heizelement für ein begreifbares Teil eines Kraftfahrzeuges, insbesondere für das Lenkrad, wobei das Heizelement aus einem Textilträger mit mindestens einem Heizwiderstand besteht, wird erfindungsgemäß ein gewirkter oder gestrickter Textilträger verwendet. Ein solcher Träger weist eine hohe Elastizität auf, so daß es sich dreidimensionalen Teilen ohne Faltenbildung anpaßt. Weiterhin ist der Heizwiderstand als Faden in den Textilträger eingewirkt oder eingestrickt. Wegen dieser Befestigungsart wird die Elastizität des Textilträgers durch den unelastischen Heizwiderstand nicht beeinträchtigt. Dabei ist der Heizwiderstand so eingewirkt, daß er auf einer Seite in geringerem Umfang vom Material des Textilträgers überdeckt ist als auf der anderen Seite. Mit der im größeren Umfang überdeckten Seite wird das Heizelement auf eine Unterlage, z.B. auf das Lenkrad, aufgelegt, während die anderer Seite die Oberseite mit den weitestgehend freiliegenden Heizwiderstand darstellt.

In einer Ausführungsform für das Lenkrad ist der Textilträger so ausgebildet, daß er den Lenkradkranz und die anschließenden Bereiche der Speichen überdeckt. Eine Überdeckung eines Teils der Speichen ist zweckmäßig, da der Fahrer beim Betätigen des Lenkrades zeitweilig auch den an den Lenkradkranz angrenzenden Bereich der Speichen umgreift. Der gewirkte oder gestrickte Träger ist so elastisch, daß er sich ohne Faltenbildung auch an die Speichen anlegt.

Vorzugsweise sind mehrere fadenförmige Heizwiderstände nebeneinander angeordnet, wobei sie insbesondere mäanderförmig verlaufen. Dabei können die Heizwiderstände sowohl in einem Abstand zueinander liegen, bei dem sie nicht ineinander greifen, als auch ineinander verschachtelt angeordnet sein, ohne daß sie sich berühren. Durch diese unterschiedlich dichte Anordnung der Heizwiderstände kann der Grad der Erwärmung beeinflußt werden.

In einer bevorzugten Ausführungsform ist der Textilträger als ebenes Band ausgebildet, an dessen beiden Enden die Heizwiderstandsenden über je ein Verbindungsstück mit den handelsüblichen Anschlußleitungen des Fahrzeugs verbunden sind. Um einen Wärmestau an den Verbindungsstücken zu vermeiden, ist es zweckmäßig, daß die Verbindungsstücke an den beiden Enden des Textilträgers über dessen Gesamtbreite mit den einzelnen Heizwiderständen verbunden sind.

Die Länge des Textilträgers kann beliebig gewählt werden, so daß z.B. ein Lenkradkranz vollständig oder nur an ausgewählten Abschnitten vom Heizelement überdeckt ist.

Obwohl infolge der weitestgehenden Überdeckung der Heizwiderstände auf der Unterseite des Textilträgers eine stärkere Abstrahlung der Wärme zur Oberseite erfolgt, kann dieser Effekt noch dadurch verstärkt werden, daß der Textilträger auf der Unterseite mit einer Reflexionsschicht versehen ist.

Das erfindungsgemäße Heizelement kann in einfacher Weise zur Beheizung unterschiedlicher Teile im Kraftfahrzeug verwendet werden. Am Lenkrad kann ein Heizelement angeordnet sein, das den gesamten Lenkradkranz bedeckt. Es können aber auch mehrere kürzere Heizelemente vorgesehen sein, die nur bestimmte Bereiche des Lenkradkranzes bedecken, z.B. die Ost-West-Segmente bei einem Lenkrad, das durch Anwendung einer elektronischen Steuerung nur um 180° nach links oder rechts betätigt werden muß. Die Heizung wird dann nur in diesen Segmenten benötigt.

Die Erfindung soll in einem Ausführungsbeispiel anhand von Zeichnungen erläutert werden. Es zeigen:
- Fig. 1: eine Draufsicht auf einen Abschnitt eines Lenkrades;
- Fig. 2: eine Draufsicht auf ein Heizelement;
- Fig. 3: die Einzelheit Z der Fig. 2;
- Fig. 4: eine perspektivische Ansicht eines Heizelementes, teilweise geschnitten;
- Fig. 5: eine perspektivische Ansicht eines Abschnittes des Lenkradkranzes, teilweise geschnitten.

In der Umhüllung eines Lenkradkranzes 1 ist ein Heizelement 2 mit Anschlußleitungen 3, 4 angeordnet. Das Heizelement 2 weist im Bereich der Speichen 5 des Lenkrades Ausstülpungen 2a auf, die um die Speichenanschlüsse 2b zum Lenkradkranz gelegt werden können, so daß auch der an den Lenkradkranz anschließende Bereich der Speichen 5 beheizbar ist. Aufgrund des erfindungsgemäß gewirkten oder gestrickten Textilträgers 6 des Heizelementes 2 läßt sich dieses faltenfrei sowohl um den Lenkradkranz 1 als auch um die Speichen 5 legen.

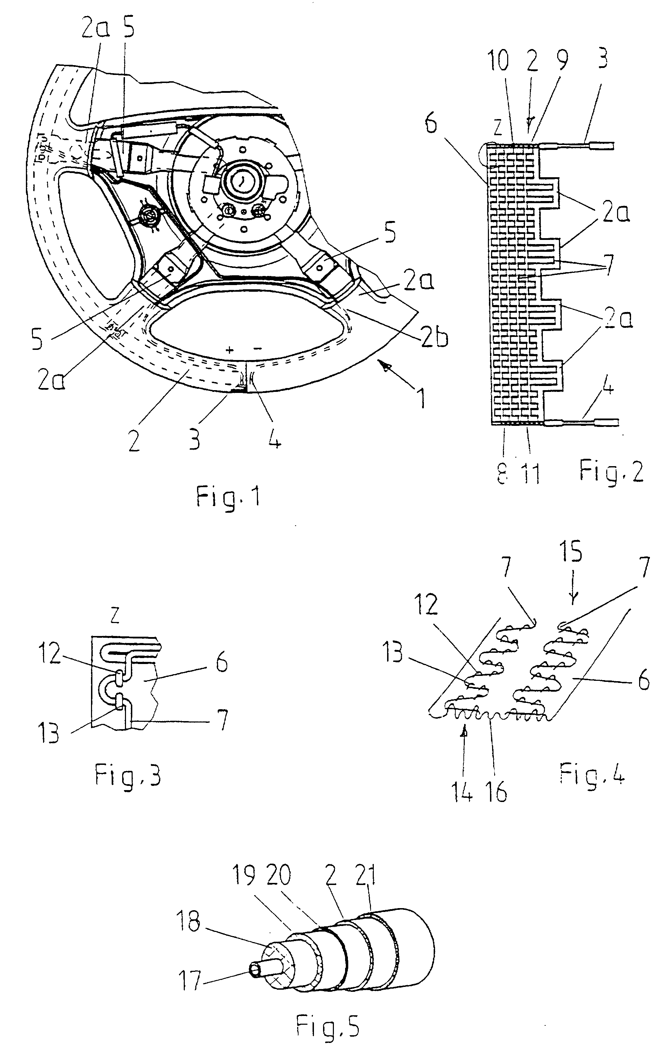

Die Fig. 2 zeigt das Heizelement 2 in ausgebreiteter Lage. In den Textilträger 6 sind Heizwiderstände 7 eingewirkt, die sich zwischen den Enden 8, 9 des Textilträgers 6 erstrecken. Die Heizwiderstände verlaufen mäanderförmig, wobei benachbarte Heizwiderstände mit Abstand zueinander angeordnet sind, so daß sie keinen elektrischen Kontakt haben. Ein elektrischer Kontakt wird nur an den Enden des Textilträgers über Verbindungsstücke 10, 11 hergestellt. Diese erstrecken sich über die gesamte Breite des Textilträgers, so daß die Enden der Heizwiderstände getrennt voneinander mit den Verbindungsstücken verbunden sind. Dadurch wird ein Wärmestau an den Verbindungsstücken vermieden. Die Verbindungsstücke 10, 11 sind mit den Anschlußleitungen 3 bzw. 4 verbunden.

In der Fig. 3 ist ausschnittsweise dargestellt, wie ein einzelner Heizwiderstand durch Maschen 12, 13 des Textilträgers mit diesem verbunden sind. Die Fig. 4 zeigt in einem größeren Ausschnitt den Textilträger 6 mit zwei Heizwiderständen 7. Der Textilträger weist eine Unterseite 14 auf, die auf dem Lenkradkranz 1 und auf den Speichenanschlüssen 2b zum Lenkradkranz aufliegt, während die Oberseite 15 von der Lenkradumhüllung 21 umgeben ist. Es ist erkennbar, daß die Heizwiderstände auf der Oberseite nicht von jeder Masche des Textilträgers umgriffen werden. Die Heizwiderstände liegen dort weitestgehend frei, so daß die Wärme nach oben abgestrahlt werden kann. Auf der Unterseite 14 erstreckt sich dagegen ein dichteres Maschenwerk 16, so daß nach dort weniger Wärme abgestrahlt wird. Ein unnötiges Aufheizen des Lenkradskeletts wird dadurch verhindert.

Aus der Fig. 5 ist der Aufbau des Lenkradkranzes 1 erkennbar. Dieser besteht in bekannter Weise aus einem Lenkradskelett 17 mit einer Kunststoffhülle 18. Diese ist in der dargestellten Ausführungsform von einer Schicht aus silberfarbig lackiertem Gummi 19 oder einer Reflexionsfolie 20 umgeben. Diese beiden Schichten sollen die Wärmeabstrahlung des Heizelementes 2, das auf der Reflexionsfolie 20 aufliegt, in noch stärkerem Maße verringern. Das Heizelement 2 ist von der Umhüllung 21 aus Leder umgeben, die die Oberfläche des Lenkrades bildet.

## Patentansprüche

1. Heizelement für ein begreifbares Teil eines Kraftfahrzeuges, insbesondere für das Lenkrad, wobei das Heizelement aus einem Textilträger mit mindestens einem Heizwiderstand besteht,
**dadurch gekennzeichnet,**
**daß** ein gewirkter oder gestrickter Textilträger (6) verwendet wird, daß der Heizwiderstand (7) als Faden in den Textilträger (6) eingewirkt oder eingestrickt ist, und daß der Heizwiderstand (7) so eingewirkt ist, daß er auf einer Seite in geringerem Umfang vom Material (16) des Textilträgers (6) überdeckt ist als auf der anderen Seite.

2. Heizelement nach Anspruch 1, **dadurch gekennzeichnet, daß** der Textilträger (6) den Lenkradkranz (1) und die anschließenden Bereiche der Speichen (5) überdeckt.

3. Heizelement nach Anspruch 1 oder 2, **dadurch gekennzeichnet, daß** mehrere fadenförmige Heizwiderstände (7) nebeneinander angeordnet sind.

4. Heizelement nach mindestens einem der vorhergehenden Ansprüche, **dadurch gekennzeichnet, daß** die fadenförmigen Heizwiderstände (7) mäanderförmig verlaufen.

5. Heizelement nach Anspruch **4, dadurch gekennzeichnet, daß** die fadenförmigen Heizwiderstände ineinander verschachtelt angeordnet sind, ohne daß sie sich berühren.

6. Heizelement nach mindestens einem der vorhergehenden Ansprüche, **dadurch gekennzeichnet, daß** der Textilträger (6) als ebenes Band ausgebildet ist, an dessen beiden Enden (8, 9) die Heizwiderstandsenden über je ein Verbindungsstück (10, 11) mit den handelsüblichen Anschlußleitungen (3, 4) des Fahrzeugs verbunden sind.

7. Heizelement nach Anspruch 6, **dadurch gekennzeichnet, daß** die Verbindungsstücke (10, 11) an den beiden Enden (8, 9) des Textilträgers (6) über dessen Gesamtbreite mit den einzelnen Heizwiderständen (7) verbunden sind.

8. Heizelement nach mindestens einem der vorhergehenden Ansprüche, **dadurch gekennzeichnet, daß** der Textilträger (6) auf der Unterseite (14) mit einer Reflexionsschicht (20) versehen ist.

## Claims

1. Heating element for a graspable part of a motor vehicle, in particular for the steering wheel, the heating element consisting of a textile support with at least one heating resistor, **characterized in that** a textile support (6) knitted by stitch row or by single stitch is used, **in that** the heating resistor (7) is knitted by stitch row or by single stitch as a thread into the textile support (6), and **in that** the heating resistor (7) is knitted in, in such a way that it is masked by the material (16) of the textile support (6) to a lesser extent on one side than on the other side.

2. Heating element according to Claim 1, **characterized in that** the textile support (6) masks the steering wheel rim (1) and the adjoining regions of the spokes (5).

3. Heating element according to Claim 1 or 2, **characterized in that** a plurality of threadlike heating resistors (7) are arranged next to one another.

4. Heating element according to at least one of the preceding claims, **characterized in that** the threadlike heating resistors (7) follow a meandering course.

5. Heating element according to Claim 4, **characterized in that** the threadlike heating resistors are arranged so as to be nested one in the other, without touching one another.

6. Heating element according to at least one of the preceding claims, **characterized in that** the textile support (6) is designed as a plane band, at the two ends (8, 9) of which the heating resistor ends are connected, in each case via a connection piece (10, 11), to the commercially available junction leads (3, 4) of the vehicle.

7. Heating element according to Claim 6, **characterized in that** the connection pieces (10, 11) are connected to the individual heating resistors (7) at the two ends (8, 9) of the textile support (6) over the entire width of the latter.

8. Heating element according to at least one of the preceding claims, **characterized in that** the textile support (6) is provided on the underside (14) with a reflection layer (20).

## Revendications

1. Elément chauffant pour une pièce saisissable d'un véhicule automobile, en particulier pour le volant de direction, ledit élément chauffant étant constitué d'un support textile muni d'au moins une résistance chauffante,
**caractérisé par le fait**
**qu'**il est fait usage d'un support textile (6) maillé ou tricoté ; par le fait que la résistance chauffante (7) est intégrée par maillage ou par tricotage dans le support textile (6), sous la forme d'un fil ; et par le fait que la résistance chauffante (7) est intégrée par maillage de façon telle qu'elle soit moins amplement recouverte par le matériau (16) du support textile (6), sur un côté, que sur l'autre côté.

2. Elément chauffant selon la revendication 1, **caractérisé par le fait que** le support textile (6) recouvre la couronne (1) du volant de direction et les régions attenantes des branches (5).

3. Elément chauffant selon la revendication 1 ou 2, **caractérisé par le fait que** plusieurs résistances chauffantes (7) en forme de fils sont agencées en juxtaposition mutuelle.

4. Elément chauffant selon au moins l'une des revendications précédentes, **caractérisé par le fait que** les résistances chauffantes (7) en forme de fils s'étendent en décrivant des méandres.

5. Elément chauffant selon la revendication 4, **caractérisé par le fait que** les résistances chauffantes en forme de fils sont agencées avec imbrication réciproque, sans se toucher.

6. Elément chauffant selon au moins l'une des revendications précédentes, **caractérisé par le fait que** le support textile (6) est réalisé sous la forme d'un ruban aplati aux deux extrémités (8, 9) duquel les extrémités des résistances chauffantes sont raccordées, par l'intermédiaire d'une pièce respective de liaison (10, 11), aux conducteurs de raccordement (3, 4) du véhicule courants dans le commerce.

7. Elément chauffant selon la revendication 6, **caractérisé par le fait que** les pièces de liaison (10, 11) sont reliées aux résistances chauffantes (7) individuelles, aux deux extrémités (8, 9) du support textile (6), sur toute la largeur de ce dernier.

8. Elément chauffant selon au moins l'une des revendications précédentes, **caractérisé par le fait que** le support textile (6) est doté d'une couche réfléchissante (20) sur la face inférieure (14).
